(19) Europäisches Patentamt European Patent Office Office européen des brevets

(11) **EP 3 805 073 B1**

(12) **EUROPEAN PATENT SPECIFICATION**

(45) Date of publication and mention of the grant of the patent:
**07.06.2023 Bulletin 2023/23**

(21) Application number: **19834858.3**

(22) Date of filing: **28.06.2019**

(51) International Patent Classification (IPC):
**B62D 15/02** (2006.01) **B60W 30/18** (2012.01)
**B60W 10/20** (2006.01) **B62D 6/00** (2006.01)

(52) Cooperative Patent Classification (CPC):
**B62D 6/002; B60W 30/18163; B62D 15/0255;**
B60W 10/20; B60W 2420/42; B60W 2552/53;
B60W 2710/207

(86) International application number:
**PCT/CN2019/093420**

(87) International publication number:
**WO 2020/011025 (16.01.2020 Gazette 2020/03)**

(54) **AUTOMATED VEHICULAR LANE CHANGING METHOD AND APPARATUS**

VERFAHREN UND VORRICHTUNG ZUM AUTOMATISCHEN SPURWECHSEL FÜR FAHRZEUGE

PROCÉDÉ ET APPAREIL DE CHANGEMENT DE VOIE DE VÉHICULE AUTOMATISÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.07.2018 CN 201810762995**

(43) Date of publication of application:
**14.04.2021 Bulletin 2021/15**

(73) Proprietors:
• **Guangzhou Chengxing Zhidong Motors
Technology Co., Ltd.
Guangzhou, Guangdong 510700 (CN)**
• **Guangzhou Xiaopeng Motors Technology Co.,
Ltd.
Tianhe District
Guangzhou
Guangdong (CN)**

(72) Inventors:
• **TU, Qiang**
**Guangzhou, Guangdong 510000 (CN)**
• **SU, Yang**
**Guangzhou, Guangdong 510000 (CN)**
• **XIAO, Zhiguang**
**Guangzhou, Guangdong 510000 (CN)**

(74) Representative: **Ran, Handong**
**Maucher Jenkins
Seventh Floor Offices
Artillery House
11-19 Artillery Row
London SW1P 1RT (GB)**

(56) References cited:
CN-A- 105 329 238       CN-A- 107 215 339
DE-A1-102010 022 620    DE-A1-102011 107 875
JP-A- 2016 194 813      KR-A- 20140 074 158
US-A1- 2009 319 113

**EP 3 805 073 B1**

**Description**

TECHNICAL FIELD

The invention relates to vehicle technologies, and particularly to an automatic lane-changing method and device for a vehicle.

BACKGROUND

With the rapid development of automobile technology, automatic driving technology has shown great potential in travel safety, energy saving and environmental protection and other aspects, and as one of the main directions of semi-automatic driving technology, automatic changing lanes has become a research emphases of major automobile manufacturers.

In the related art, when a vehicle in an automatic driving state receives a lane-changing request, the vehicle can determine a lane where the vehicle is located after changing lanes, according to the lane-changing direction information providing by the lane-changing request, and the vehicle can predict a position information of the vehicle in the lane after changing lanes. Afterwards, the vehicle can plan a lane-changing path for the vehicle, by taking a current position as a beginning, taking a predicted position as a destination and taking a given condition, such as the shortest lane-changing time, as an optimization target, and then the vehicle is driven to change lanes according to the planned lane-changing path. With fewer considered factors, there is a possibility that the steering angle may be too large at a certain moment during the lane-changing process to result in an unsuccessful lane-changing.

It can be seen that, there is a possibility that the steering angle may be too large at a certain moment during the automatic lane-changing process to result in an unsuccessful lane-changing in the related art.

US 2009/319113 A1 discloses a system and method for providing path generation for lane centering and/or lane changing purposes in an autonomous or semi-autonomous vehicle. The path generation system includes a desired path generation processor that receives signals detecting the roadway on which the vehicle is traveling, a request for a lane change and a steering angle of the vehicle. The system also includes a path prediction processor that predicts the vehicle path for the next few seconds of time based on vehicle state information including vehicle longitudinal speed, vehicle lateral speed, vehicle yaw-rate vehicle steering angle. The desired path information and the predicted path information are compared to generate an error signal that is sent to a lane change adaptive cruise control (LXACC) system that provides a steering angle signal to turn the vehicle and reduce the error signal. The steering angle signal is sent to a vehicle steering control sub-system that steers the vehicle, and provides measurements of vehicle states that are used by the path prediction processor.

SUMMARY

The invention provides an automatic lane-changing method and device for a vehicle. The invention is set out in the appended set of claims.

BRIEF DESCRIPTION OF THE DRAWINGS

Drawings described herein are provided to enable a further understanding of the invention, and constitute a portion of the present disclosure.

FIG. 1 is a diagram of automatic lane-changing of a vehicle, according to an embodiment of the invention.
FIG. 2 is a schematic flowchart of a method for predicting a motion state of a vehicle when arriving at a lane-changing destination, according to an embodiment of the invention.
FIG.3 is a diagram of a two degree-of-freedom vehicle model, according to an embodiment of the invention.
FIG.4 is a diagram of a result of a planned lane-changing path, according to an embodiment of the invention.
FIG.5 is a schematic flowchart of an automatic lane-changing method for a vehicle, according to an embodiment of the invention.
FIG.6 is a structural block diagram of an electronic device for realizing an automatic lane-changing method for a vehicle, according to an embodiment of the invention.
FIG.7 is a structural block diagram of an electronic device for realizing an automatic lane-changing method for a vehicle, according to another embodiment of the invention.

DETAILED DESCRIPTION OF EMBODIMENTS

The present invention provides an automatic lane-changing method and device for a vehicle to solve the problem in the related art that there is a possibility that the steering angle may be too large at a certain moment during the automatic lane-changing process, resulting in an unsuccessful lane-changing.

The preferred embodiments of the disclosure will be described in the following with reference to the accompanying drawings of the embodiments. The embodiments of the disclosure and features of the embodiments can be combined in case of no conflict.

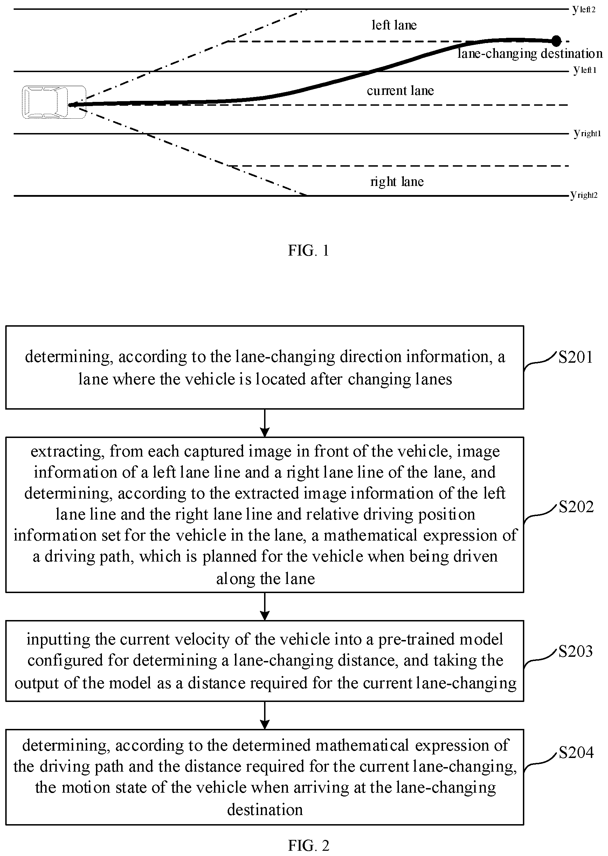

Please refer to FIG.1, which is a diagram showing automatic lane-changing of a vehicle, according to an embodiment of the disclosure. In FIG. 1, a relative driving position of the vehicle in a lane is set as the center of the lane, and the vehicle is assumed to be automatically driven along a middle one of illustrated lanes. In practice, the vehicle in an automated driving state captures images in front of the vehicle in real time to obtain information of lanes in front of the vehicle. Lane-changing direction information, such as the lane-changing information of turning to the left or turning to the right, is sent to the vehicle when it is needed to change lanes. After receiving a lane-changing request, the vehicle predicts a motion state of the vehicle when arriving at a lane-changing destination, according to the lane-changing direction information, captured images in front of the vehicle and a current velocity of the vehicle. For example, the motion states include coordinates and a heading angle of the vehicle.

A lane-changing path and a velocity for the vehicle at an i-th time are planned for the vehicle, where i is an integer greater than or equal to 0. The lane-changing path and the velocity at the i-th time are planned and acquired by taking the motion state of the vehicle at the i-th time as an initial motion state and taking the predicted motion state as a target motion state, and a steering angle of the vehicle at the i-th time is determined according to a curvature of the lane-changing path, the velocity of the vehicle and a constructed model configured for determining the steering angle at the i-th time.

It is judged whether the steering angle of the vehicle at the i-th time falls in an effective steering angle range. The effective steering angle range is determined based on the beginning and the destination of the lane-changing path. When it is judged not, the step of planning a lane-changing path and a velocity for the vehicle at an i-th time is returned to. When it is judged yes, the motion state of the vehicle at an (i+1)-th time is determined, according to a vehicle motion model, the motion state of the vehicle at the i-th time, and the steering angle of the vehicle at the i-th time

It is judged whether a difference between the target motion state and the motion state of the vehicle at the (i+1)-th time is larger than a preset error. When it is judged yes, i is updated to i+1 and the step of planning a lane-changing path and a velocity for the vehicle at an i-th time is returned to, that is to plan a lane-changing path and a velocity for the vehicle at next moment. When it is judged not, the vehicle is driven to change lanes according to the planned lane-changing path and velocity at any time.

In the embodiments of the disclosure, when the vehicle changing lanes, the effective steering angle rage is determined according to the beginning and the destination of the lane-changing path. Then a lane-changing path and a velocity for the vehicle is planned periodically, and ensures that the steering angle of the vehicle at the i-th time falls in the effective steering angle range when the vehicle is driven according to the planned lane-changing path and velocity for the vehicle at every moment. Therefore, the unsuccessful lane-changing due to a large steering angle can be avoided. A smoothness of steering during the lane-changing is achieved by using the vehicle motion model to iteratively determine the motion state of the vehicle at any moment, and a better user experience is achieved.

The above processes will be described in detail in the following with reference to specific embodiments.

With reference to FIG.1, assuming that lane-changing direction information provided with a received lane-changing request of a vehicle is changing lanes to the left, and a motion state of the vehicle after changing lanes can be predicted as illustrated in FIG. 2.

S201: a lane where the vehicle is located after changing lanes is determined, according to the lane-changing direction information.

S202: image information of a left lane line and a right lane line of a current lane is extracted from each captured image in front of the vehicle, and a mathematical expression of a driving path, which is planned for the vehicle when being driven along the lane, is determined according to the extracted image information of the left lane line and the right lane line and relative driving position information set for the vehicle in the lane.

In the specific implementation, a polynomial is used to fit the lane line. For example, a polynomial configured to fit the right lane line is:

$$y_{left1} = a_{l10} + a_{l11} \cdot x + a_{l12} \cdot x^2 + a_{l13} \cdot x^3.$$

A polynomial configured to fit the left lane line is:

$$y_{\text{left2}} = a_{l20} + a_{l21} \cdot x + a_{l22} \cdot x^2 + a_{l23} \cdot x^3.$$

That is, determining the polynomial configured to fit the right lane line is, , determining values of $a_{l10}$, $a_{l11}$, $a_{l12}$, $a_{l13}$ according to the image information of the right lane line. Determining the polynomial configured to fit the left lane line is, determining values of $a_{l20}$, $a_{l21}$, $a_{l22}$, $a_{l23}$, according to the image information of the left lane line.

Assuming that a relative driving position of the vehicle in the lane is set as the center of the lane, and the mathematical expression of the driving path, which is planned for the vehicle when being driven along the lane is:

$$y_{\text{left}} = \frac{a_{l10} + a_{l20}}{2} + \frac{a_{l11} + a_{l21}}{2} \cdot x + \frac{a_{l12} + a_{l22}}{2} \cdot x^2 + \frac{a_{l13} + a_{l23}}{2} \cdot x^3.$$

S203: the current velocity of the vehicle is inputted into a pre-trained model configured for determining a lane-changing distance, and the output of the model is taken as a distance required for the current lane-changing.

By analyzing a point set of velocities and lane-changing distances, inventors find that using cubic polynomial fit can reflect the relationship between the velocity and the lane-changing distance. Therefore, in the embodiment of the disclosure, a cubic polynomial is used to fit the relationship between the velocity and the lane-changing distance. The relation curves between the velocity and the lane-changing distance are is:

$$Dis\_LC = a_0 + a_1 v + a_2 v^2 + a_3 v^3;$$

where $a_0$, $a_1$, $a_2$, $a_3$ are coefficients of the cubic polynomial which are determined from offline simulation data.

In the specific implementation, the distance required for the current lane-changing is obtained by substituting the current velocity of the vehicle into the above formula.

S204: the motion state of the vehicle when arriving at the lane-changing destination is determined, according to the determined mathematical expression of the driving path and the distance required for the current lane-changing.

Particularly, coordinates of the lane-changing destination, which are represented by $(x_f, y_f)$, are obtained by solving the following equations:

$$\begin{cases} y_f = \frac{a_{l10} + a_{l20}}{2} + \frac{a_{l11} + a_{l21}}{2} \cdot x_f + \frac{a_{l12} + a_{l22}}{2} \cdot x_f^2 + \frac{a_{l13} + a_{l23}}{2} \cdot x_f^3 \\ l^2 = (x_f - x_0)^2 + (y_f - y_0)^2 \end{cases};$$

where $l$ represents a distance required for the current lane-changing, and $(x_0, y_0)$ represents coordinates of the vehicle at the beginning of changing lanes.

Then, a first-order derivative function is acquired for $y_{\text{left}} = \frac{a_{l10} + a_{l20}}{2} + \frac{a_{l11} + a_{l21}}{2} \cdot x + \frac{a_{l12} + a_{l22}}{2} \cdot x^2 + \frac{a_{l13} + a_{l23}}{2} \cdot x^3$, and a value of the first-order derivative function at $(x_f, y_f)$ is calculated, and the value is taken as a heading angle of the vehicle after changing lanes.

In addition, a second-order derivative function is acquired for $y_{\text{left}} = \frac{a_{l10} + a_{l20}}{2} + \frac{a_{l11} + a_{l21}}{2} \cdot x + \frac{a_{l12} + a_{l22}}{2} \cdot x^2 + \frac{a_{l13} + a_{l23}}{2} \cdot x^3$, and a value of the second-order derivative function at $(x_f, y_f)$ is calculated, and the value is taken as a target curvature of the last segment of the lane-changing path, which is planned for the vehicle.

It should be noted that there is no strict sequential relationship between the S202 and the S203.

In the specific implementation, after predicting the motion state of the vehicle when arriving at the lane-changing destination, the problem of determining path can be described as the problem of solving the following equation:

$$F(\overrightarrow{X_0}, U) - \overrightarrow{X_f} = 0$$

where:

$\overrightarrow{X_0}$ represents a motion state of the vehicle at the beginning of the lane-changing path, which is represented as $(x_0, y_0, \theta_0, k_0)$, and $(x_0, y_0)$ represents the coordinates of the vehicle at the beginning of changing lanes, and $\theta_0$ represents the heading angle of the vehicle at the beginning of changing lanes; and $k_0$ represents the curvature of the lane-changing path, which is planned for the vehicle at the beginning of changing lanes (corresponds to the i-th time where i=0), where $\theta_0$ and $k_0$ are preset;

$\overrightarrow{X_f}$ represents a motion state of the vehicle at the lane-changing destination, which is $(x_f, y_f, \theta_f, k_f)$, and $(x_f, y_f)$ represents the coordinates of the vehicle at the lane-changing destination, and $\theta_f$ represents the heading angle of the vehicle at the lane-changing destination; and $k_f$ represents the curvature of the last segment of the lane-changing path, which is planned for the vehicle;

$U$, which is to be solved, represents the curvature of the lane-changing path planned for the vehicle, and $U$ is changed with time;

$\overrightarrow{X} = F(\overrightarrow{X_0}, U)$ is the vehicle motion model.

Firstly, U is defined as a cubic polynomial changed with time:

$$U = c_0 + c_1 t + c_2 t^2 + c_3 t^3, \ t \in [0, T];$$

where, parameters $c_0, c_1, c_2, c_3$ are required to be solved, and T represents a total time for changing lanes.

There are two advantages of using the cubic polynomial to define U. Firstly, a solution space for the target input is decreased. Secondly, the road smoothness of the lane-changing path is increased, as the cubic polynomials can cover higher order of the curvature of the lane-changing path.

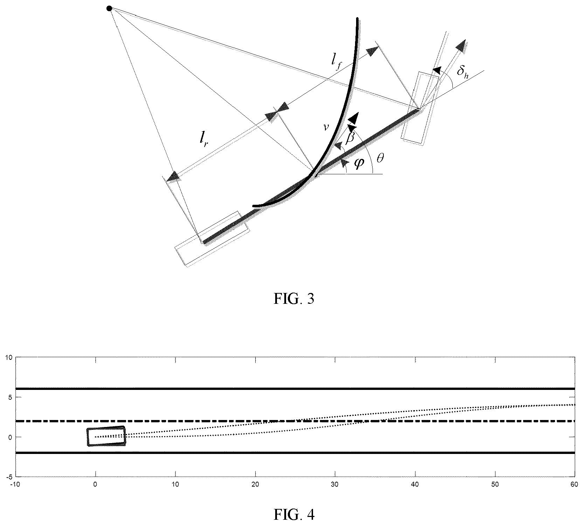

In the embodiment of the disclosure, $\overrightarrow{X} = F(\overrightarrow{X_0}, U)$ can be obtained by a two degree-of-freedom vehicle model. With reference to FIG.3, where $x(t)$ represents a side slip angle and a yaw angle rate, and $u(t)$ represents a front wheel angle, the two degree-of-freedom vehicle model is:

$$x(t) = \begin{bmatrix} \beta(t) \\ \omega_r(t) \end{bmatrix} \qquad u(t) = \frac{\delta_h(t)}{i_s} \ ;$$

$$\begin{cases} \dot{x}(t) = Ax(t) + Bu(t) \\ y(t) = Cx(t) + Du(t) \end{cases};$$

$$A = \begin{bmatrix} A_{11} & A_{12} \\ A_{21} & A_{22} \end{bmatrix} \qquad B = \begin{bmatrix} B_{11} \\ B_{21} \end{bmatrix};$$

$$A_{11} = -\frac{k_f + k_r}{mv}; \ A_{12} = -\frac{l_f k_f - l_r k_r}{mv^2} - 1;$$

$$A_{21} = -\frac{l_f k_f - l_r k_r}{I_z}; \ A_{22} = -\frac{l_f^2 k_f + l_r^2 k_r}{v I_z};$$

$$B_{11} = \frac{k_f}{mv}; \ B_{12} = \frac{l_f k_f}{I_z};$$

where:

  $m$ represents a quality of the vehicle;
  $I_z$ represents a moment of inertia of yaw moment;
  $v$ represents a velocity of the vehicle;
  $k_f$ represents a tire cornering stiffness of a front wheel;

$k_r$ represents a tire cornering stiffness of a rear wheel;

$l_f$ represents a distance between a front axle and a center of gravity of the vehicle;

$l_r$ represents a distance between a rear axle and a center of gravity of the vehicle;

$\beta$ represents a side slip angle;

$\omega_r$ represents a yaw angle rate;

$\delta_h$ represents a steering angle;

$i_s$ represents a steering ratio;

$\varphi$ represents a yaw angle.

A vehicle kinematic equation is:

$$\dot{x}_v = v \cdot cos(\theta + \beta);$$

$$\dot{y}_v = v \cdot sin(\theta + \beta);$$

$$\dot{\theta} = \omega_r;$$

Correspondingly, the vehicle motion model is:

$$\begin{bmatrix} \dot{x}_v \\ \dot{y}_v \\ \dot{\theta} \\ \dot{\beta} \\ \ddot{\theta} \end{bmatrix} = \begin{bmatrix} v \cdot cos(\theta + \beta) \\ v \cdot sin(\theta + \beta) \\ \dot{\theta} \\ A_{11}\beta + A_{12}\dot{\theta} \\ A_{21}\beta + A_{22}\dot{\theta} \end{bmatrix} + \begin{bmatrix} 0 \\ 0 \\ 0 \\ B_{11} \\ B_{21} \end{bmatrix} \cdot \frac{\delta_h}{i_s} \; ;$$

$$\delta_h = U \cdot (1 + K \cdot v^2) \cdot L \cdot i_s;$$

$$K = -\frac{m}{(l_f + l_r) \cdot (l_f + l_r)} \cdot \left( \frac{l_f}{k_r} - \frac{l_r}{k_f} \right);$$

where, $(x_v, y_v)$ represents a position coordinates of the vehicle.

Finally, the formula $F(\overrightarrow{X_0}, U) - \overrightarrow{X_f} = 0$ is solved.

Because the above formula is a nonlinear equation, the curvature of the lane-changing path, which is represented as U, can be obtained by using an analytical method. A detailed solving process is:

$$\overrightarrow{\Delta X(U_k)} = \overrightarrow{X_f} - \overrightarrow{X_f(U_k)};$$

$$J\Delta U = -\overrightarrow{\Delta X(U_k)};$$

$$\Delta U = -J^{-1} \cdot (\overrightarrow{\Delta X(U_k)});$$

$$U_{k+1} = U_k + \Delta U;$$

where $\overrightarrow{X_f(U_k)} = F(\overrightarrow{X_0}, U_k)$, $U_K = c_{0k} + c_{1k}t + c_{2k}t^2 + c_{3k}t^3$, $t = 0 \sim T_k$, $k$ represents a iteration number, $T_k$ represents a time

for changing lanes at $k$ times of iterations, $\Delta U$ represents an increment of $U_K$ of the iteration process, $J = \frac{\partial \Delta X(U)}{\partial U}\bigg|_{U(k)}$

, where $J$ represents a Jacobian matrix.

Iteration of the solving process stops on criterion $\overrightarrow{X_f(U_{k+1})} - \overrightarrow{X_f(U_k)} < e_{iter}$ ($e_{iter}$ represents an error of an iterative criterion), and a value of $U_{k+1}$ is the target lane-changing path of the solving process. A diagram of the result of a planned lane-changing path is illustrated in FIG. 4. Both of dashed lines are lane-changing paths, and the beginning and the destination of the lane-changing path are the same. The planned lane-changing paths are different due to different heading angles.

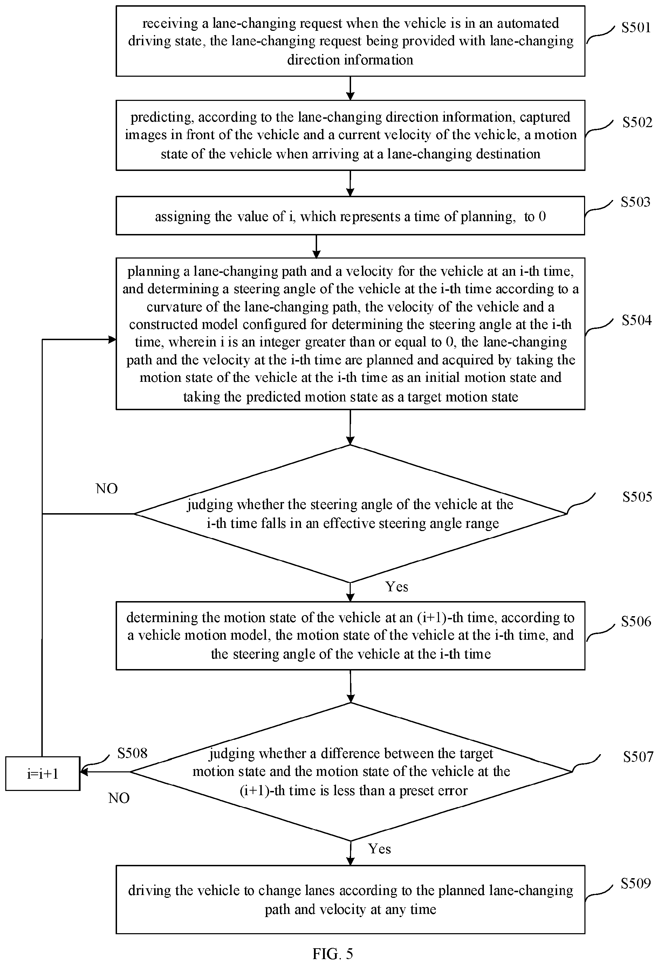

As shown in FIG. 5, an embodiment of the disclosure provides a schematic flowchart showing an automatic lane-changing method for a vehicle. The method includes the following steps.

S501: a vehicle in an automated driving state receives a lane-changing request, and the lane-changing request is provided with lane-changing direction information.

S502: a motion state of the vehicle when arriving at a lane-changing destination is predicted, according to the lane-changing direction information, captured images in front of the vehicle and a current velocity of the vehicle.

The detailed process can be referred to FIG. 2 and details are not repeated here again.

S503: the value of i, which represents a time of planning, is assigned to 0.

S504: a lane-changing path and a velocity for the vehicle at an i-th time is planned according by taking the motion state of the vehicle at the i-th time as an initial motion state and taking the predicted motion state as a target motion state, and a steering angle of the vehicle at the i-th time is determined according to a curvature of the lane-changing path, the velocity of the vehicle and a constructed model configured for determining the steering angle at the i-th time.

The time at the beginning of changing lanes is taken as time 0, where i is an integer greater than or equal to 0, and increments by a preset interval time, such as interval $\Delta t$. When the vehicle arrives at the lane-changing destination, the increment of i ends. Therefore, a total time for changing lanes, which is represented as $T$, can be obtained.

In the specific implementation, a lane-changing path planned for the vehicle is planned according to a position of the vehicle at the i-th time and the lane-changing destination. Then, the velocity of the vehicle at the i-th time is calculated according to a length of the lane-changing path and $\Delta t$. Then, the curvature of the planned lane-changing path at the i-th time represented by $U$, and the velocity of the planned vehicle at the i-th time represented by $v$ are substituted into the following formula:

$$\delta_h = U \cdot (1 + K \cdot v^2) \cdot L \cdot i_s;$$

and the steering angle at the i-th time represented by $\delta_h$ is obtained;

where $L$ represents a distance between a front axle and a rear axle of the vehicle, $i_s$ represents a steering ratio of the vehicle, and $K$ represents a preset stability factor. $K$ could be obtained by the following formula:

$$K = -\frac{m}{(l_f + l_r) \cdot (l_f + l_r)} \cdot \left(\frac{l_f}{k_r} - \frac{l_r}{k_f}\right);$$

where m represents a quality of the vehicle, $k_f$ represents a tire cornering stiffness of a front wheel, $k_r$ represents a tire cornering stiffness of a rear wheel, $l_f$ represents a distance between the front axle and a center of gravity of the vehicle, $l_r$ represents a distance between the rear axle and the center of gravity of the vehicle.

S505: it is judged that whether the steering angle of the vehicle at the i-th time falls in an effective steering angle range. If yes, then the S506 is performed. If not, the S504 is performed to plan a lane-changing path and a velocity for the vehicle at the i-th time.

Where the effective steering angle range is determined based on the beginning and the destination of the lane-changing path. For example, the beginning of the lane-changing path is represented as $(x_0, y_0)$, and the destination of the lane-changing path is represented as $(x_f, y_f)$. If changing lanes to the left, a corresponding effective steering angle range is $(0°, 1.2 arc\ tan\ \alpha)$; if changing lanes to the right, a corresponding effective steering angle range is $(-1.2 arc\ tan\ \alpha, 0°)$, where $tan\ \alpha = \frac{y_f - y_0}{x_f - x_0}$. The above range is an example, and the specific range can be determined by technicians, according to the actual situation.

In the specific implementation, if it is determined that the lane-changing path and the velocity of the vehicle at the i-th time need to be re-planned for the vehicle, the curvature of the lane-changing path planned last time can be fine-tuned according to a certain rule, such as, by subtracting a set rate.

S506: a motion state of the vehicle at an (i+1)-th time is determined according to a vehicle motion model, the motion state of the vehicle at the i-th time, and the steering angle of the vehicle at the i-th time.

In the specific implementation, the steering angle of the vehicle at the i-th time is substituted into the vehicle motion model, and the output of the model is taken as an increment of the motion state of the vehicle. A summation of the motion state of the vehicle at the i-th time and the increment is taken as a motion state of the vehicle at the (i+1)-th time.

Specifically, the motion state of the vehicle at the (i+1)-th time is predicted according to the following vehicle motion model:

$$\begin{bmatrix} \dot{x}_v \\ \dot{y}_v \\ \dot{\theta} \\ \dot{\beta} \\ \ddot{\theta} \end{bmatrix} = \begin{bmatrix} v \cdot cos(\theta + \beta) \\ v \cdot sin(\theta + \beta) \\ \dot{\theta} \\ A_{11}\beta + A_{12}\dot{\theta} \\ A_{21}\beta + A_{22}\dot{\theta} \end{bmatrix} + \begin{bmatrix} 0 \\ 0 \\ 0 \\ B_{11} \\ B_{21} \end{bmatrix} \cdot \frac{\delta_h}{i_s};$$

where, the meaning of parameters is the same as the above description, and details are not repeated here again.

S507: it is judged that whether a difference between the target motion state and the motion state of the vehicle at the (i+1)-th time is less than a preset error. If yes, then the S509 is performed. If not, the S508 is performed.

For example, the difference can be obtained by using the following formula:

$$\mathrm{err} = (y_f - y_{i+1})^2 + (x_f - x_{i+1})^2 + (\theta_f - \theta_{i+1})^2;$$

where, $(x_{i+1}, y_{i+1}, \theta_{i+1})$ represents the motion state of the vehicle at the (i+1)-th time.

If the err is less than the preset error, the motion state of the vehicle is considered to approach the target motion state, otherwise, the path planning is continued for next moment.

S508: i is updated to i+1 and return to the S504 to plan a lane-changing path and a velocity for the vehicle at next moment.

S509: the vehicle is driven to change lanes according to the planned lane-changing path and velocity at any time.

After the above processes, the lane-changing path and the velocity are planned for the vehicle at every Δt interval from the time at the beginning of changing lanes. The vehicle is driven to change lanes according to the planned lane-changing path and velocity at any moment.

In addition, when the motion state of the vehicle arriving at the lane-changing destination is predicted, a target curvature of the last segment of the lane-changing path, which is planned for the vehicle, is planned in the specific implementation. When the difference between the motion state of the vehicle at the (i+1)-th time and the target motion state is judged less than the preset error, it is determined whether a difference between the target curvature and the curvature of the lane-changing path at the i-th time is less than a preset value. In this manner, the vehicle can be automatically driven along the lane after the completion of changing lanes, and the smoothness of the lane-changing is improved.

The above processes will be described in the following description.

Assuming that a vehicle in an automated driving state receives a request to change lanes to the left, and image information of a left lane line and a right lane line of the left lane is extracted from each captured image in front of the vehicle. A mathematical expression of a driving path, which is planned for the vehicle when being driven along the left lane, is determined according to the extracted image information of the left lane line and the right lane line, and a relative driving position information set for the vehicle in left lane. A current velocity of the vehicle is input into a pre-trained model configured for determining a lane-changing distance, and an output of the model is taken as a distance required for the current lane-changing. A motion state of the vehicle when arriving at a lane-changing destination and a target curvature of the last segment of the lane-changing path, which is planned for the vehicle, are determined, according to the determined mathematical expression of the driving path and the distance required for the current lane-changing.

Then, the lane-changing path and the velocity are planned for the vehicle at every preset time interval, such as 1 second, from the beginning of changing lanes. For each lane-changing path and velocity planned for the vehicle, if a steering angle of the vehicle, which is driven along the planned lane-changing path at the planned velocity, falls in an effective steering angle range, the motion state of the vehicle at an (i+1)-th time is determined, according to a vehicle motion model, the motion state of the vehicle at the i-th time, and the steering angle of the vehicle at the i-th time. The first difference between the motion state of the vehicle at the (i+1)-th time and the motion state of the vehicle when arriving at the lane-changing destination is calculated. The second difference between the target curvature and the curvature of the lane-changing path at the i-th time is calculated. It is judged whether a summation of the first difference and the second difference is less than a preset value, and if not, i is updated to i+1; otherwise, it is considered that the motion state of the vehicle at the i-th time has reached the predicted motion state of the vehicle arriving at the lane-changing destination, and the path planning ends.

Then, the vehicle is driven to change lanes according to the planned lane-changing path and velocity at any moment.

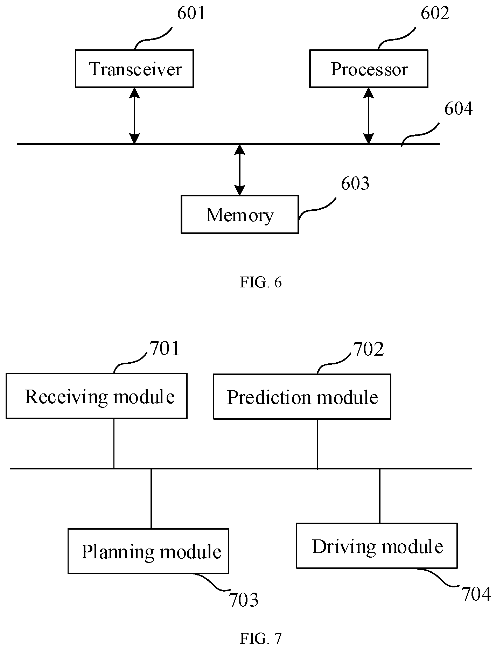

Please refer to FIG.6, which is a structural block diagram showing an electronic device for realizing an automatic lane-changing method for a vehicle, according to an embodiment of the disclosure. The electronic device includes physical components, such as a transceiver 601 and a processor 602. The processor 602 may be a central processing unit (CPU), a microprocessor, an application specific integrated circuit, a programmable logic circuit, a large-scale integration circuit, or a digital processing unit, etc. The transceiver 601 is used to send and receive data from the electronic device and other devices.

The electronic device may further include a memory 603. The memory 603 is used to store computer instructions, which are executed by the processor 602. Furthermore, the memory 603 may store other data required by the device, such as identification information of the device, encrypted information of the device, user data, etc.. The memory 603 may be volatile memory, such as random-access memory (RAM). The memory 603 may also be non-volatile memory, such as read-only memory (RAM); and memory 603 can also be non-volatile memory, such as read-only memory, memory (ROM), flash memory, hard disk drive (HDD), solid-state drive (SSD), or any other medium that can be used to carry or store expected program code in a command or data structure form and that can be accessed by a computer, but is not limited thereto. The memory 603 may be a combination of the above memories.

This embodiment of the disclosure imposes no limitation on a specific connection medium between the processor 602, the memory 603 and the transceiver 601. In the embodiment of the disclosure in FIG. 6, the memory 603, the processor 602, and the transceiver 601 are connected by using a bus 604. The bus is represented by using a bold line in FIG. 6. A manner of connection between other parts is merely an example for description, and is not constructed as limitation. The bus may be one or more of an address bus, a data bus, or a control bus. For ease of representation, the bus in FIG. 6 is represented by using only one bold line, but it does not indicate that there is only one bus or only one type of bus.

The processor 602 may be a dedicated hardware or a processor running software. When the processor 602 runs software, the processor 602 reads the software instructions stored in the memory 603. The automatic lane-changing method of the above-described embodiments is implemented when the software instructions are executed.

When the method of the above-described embodiments is implemented in software, hardware or a combination of hardware and software, the device may include a number of functional modules. Each module may include software, hardware or a combination thereof. Specifically, a structural block diagram of an electronic device according to another embodiment of the disclosure is illustrated in FIG. 7. The electronic device may include a receiving module 701, a prediction module 702, a planning module 703 and a driving module 704.

The receiving module 701 is configured to receive a lane-changing request when the vehicle is in an automated driving state. The lane-changing request is provided with lane-changing direction information.

The prediction module 702 is configured to predict, according to the lane-changing direction information, captured images in front of the vehicle and a current velocity of the vehicle, a motion state of the vehicle when arriving at a lane-changing destination.

The planning module 703 is configured to plan a lane-changing path and a velocity for the vehicle at an i-th time; determine a steering angle of the vehicle at the i-th time according to a curvature of the lane-changing path, the velocity of the vehicle and a constructed model configured for determining the steering angle at the i-th time, and judge whether the steering angle of the vehicle at the i-th time falls in an effective steering angle range. The lane-changing path and the velocity at the i-th time are planned and acquired by taking the motion state of the vehicle at the i-th time as an initial motion state and taking the predicted motion state as a target motion state. The effective steering angle range is determined based on the beginning and the destination of the lane-changing path. The planning module is further configured to return to the step of planning a lane-changing path and a velocity for the vehicle at an i-th time when it is judged not. The planning module is further configured to determine the motion state of the vehicle at an (i+1)-th time, according to a vehicle motion model, the motion state of the vehicle at the i-th time, and the steering angle of the vehicle at the i-th time, when it is judged yes. i is an integer greater than or equal to 0.

The driving module 704 is configured to judge whether a difference between the target motion state and the motion state of the vehicle at the (i+1)-th time is larger than a preset error. The driving module 704 is further configured to update i to i+1 and return to the step of planning a lane-changing path and a velocity for the vehicle at an i-th time, when it is judged yes. The driving module 704 is configured to drive the vehicle to change lanes according to the planned lane-changing path and velocity at any time, when it is judged not.

In a possible embodiment, the prediction module 702 is specifically configured to:

determine, according to the lane-changing direction information, a lane where the vehicle is located after changing lanes;

extract, from each of the captured images in front of the vehicle, image information of a left lane line and a right lane line of the lane, and determine, according to the extracted image information of the left and right lane lines and relative driving position information set for the vehicle in the lane, a mathematical expression of a driving path, which is planned for the vehicle when being driven along the lane; and

input the current velocity of the vehicle into a pre-trained model configured for determining a lane-changing distance, and take the output of the model as a distance required for the current lane-changing; and

determine, according to the determined mathematical expression of the driving path and the distance required for the current lane-changing, the motion state of the vehicle when arriving at the lane-changing destination.

In a possible embodiment, the prediction module 702 is specifically configured to:

determine, according to the extracted image information of each of the left and right lane lines, a mathematical expression of each of the left and right lane lines;

determine, according to the mathematical expressions of the left and right lane lines, and the relative driving position information set for the vehicle in the lane, the mathematical expression of the driving path, which is planned for the vehicle when being driven along the lane.

In a possible embodiment, the motion state of the vehicle comprises coordinates of the vehicle and a heading angle of the vehicle, the prediction module 702 is specifically configured to:

determine, according to the mathematical expression of the driving path and the distance required for the current lane-changing, coordinates of the lane-changing destination; and

acquire a first-order derivative function for the mathematical expression of the driving path, calculate a value of the first-order derivative function at the coordinates, and take the value as the heading angle of the vehicle when arriving at the lane-changing destination.

In a possible embodiment, the prediction module is further configured to acquire a second-order derivative function for the mathematical expression of the driving path, calculate a value of the second-order derivative function at the coordinates, and take the value as a target curvature of the last segment of the lane-changing path, which is planned for the vehicle; and

the driving module is further configured to determine a difference between the target curvature and the curvature of the lane-changing path at the i-th time is less than a preset value, when the difference between the motion state of the vehicle at the (i+1)-th time and the target motion state is judged less than the preset error.

The planning module is specifically configured to:

substitute the curvature of the lane-changing path at the i-th time represented by U, and the velocity of the vehicle at the i-th time represented by $v$ into the following formula:

$$\delta_h = U \cdot (1 + K \cdot v^2) \cdot L \cdot i_s;$$

where L represents a distance between a front axle and a rear axle of the vehicle, $i_s$ represents a steering ratio of the vehicle, and K represents a preset stability factor; and

obtain the steering angle at the i-th time represented by $\delta_h$.

It should be noted that the module division in the embodiments of the disclosure is illustrative only, and is merely logical function division. There may be another division manner in practice. In addition, functional modules in the embodiments of the disclosure may be integrated into one processing module, or each of the modules may exist alone physically, or two or more modules are integrated into one module. The coupling of the individual modules can be achieved by a number of interfaces, which are generally electrical communication interfaces. The mechanical interfaces and interfaces in other forms are not excluded. Therefore, the module described as a separate part may be or may be not physically separated. The module may be arranged in one location, or may be distributed in different locations of one or different devices. The integrated module may be implemented in a form of hardware, or may be implemented in a form of a software functional module.

An embodiment of the disclosure provides a computer-readable storage medium. The medium stores computer-executable instructions required to be executed by the processor, it includes programs required to be executed by the processor.

In some possible embodiments, the aspects of the automatic lane-changing method for a vehicle, which is provided by the disclosure, may be implemented as a form of a program product. The program product includes program codes. When the program product is executed by the electronic device, the program codes are used to enable the electronic device to execute the steps of the automatic lane-changing method for a vehicle, which is described in the description according to the embodiments of the disclosure.

The program product may employ any combination of one or more computer readable media. The computer readable medium can be a computer readable signal medium or a computer readable storage medium. The computer readable storage medium can be, for example, but not limited to, an electronic, magnetic, optical, electromagnetic, infrared, or semiconductor system, apparatus, or device, or any combination of the above. More specific examples (non-exhaustive lists) of computer readable storage media include: electrical connections with one or more wires, portable computer disks, hard disks, random access memory (RAM), read only memory (ROM), erasable programmable read only memory (EPROM) or flash memory, optical fiber, portable compact disk read only memory (CD-ROM), optical storage device, magnetic memory pieces, or any suitable combination of the above.

The computer program product of the automatic lane-changing method for a vehicle provided by the embodiments of the disclosure may be embodied in the portable compact disk read only memory (CD-ROM) and include program codes, which is executable in a computer. The program product of the disclosure is not limited to the embodiments. In the disclosure, the computer readable storage medium can be any tangible medium that can contain or store a program, which can be used by or in connection with an instruction execution system, apparatus or device.

The readable signal medium may comprise data signal propagated in a baseband or as a part of the carrier wave, in which carries readable program code. The data signal in such propagation way can take a variety of forms, comprising but not limited to: electromagnetic signal, optical signal or any suitable combination the above. The readable signal medium may also be any readable medium other than a readable storage medium. The readable medium can send, propagate, or transmit such program to the instruction performed system, device, or apparatus for use.

Program codes embodied in the computer readable medium can be transmitted by any suitable medium, including but not limited to wireless, wire, fiber optic cable, RF, or any suitable combination of the above.

The computer program codes for performing the operations of the disclosure may be written in one or more programming languages, or a combination thereof, including an object oriented programming language such as Java, C++, and conventional procedural programming language-such as the "C" language or a similar programming language. The program codes may execute entirely on the user's computer, partly on the user's computer, as a stand-alone software package, partly on the user's computer and partly on a remote computer, or entirely on the remote computer or a server. In the case of regarding the remote computer, the remote computer can be connected to the user computer through any kind of network, including a local area network (LAN) or a wide area network (WAN), or can be connected to an external computer (e.g., using an Internet service provider via the Internet).

It should be noted that although several units or sub-units of the device are described in the above detailed description, but the division is merely exemplary and not obligatory. In practice, the features and functions of two or more of the units described above may be embodied in a single unit in accordance with the embodiments of the disclosure. Conversely, the features and functionalities of a single unit describe above may be further divided to be embodied by a number of units.

In addition, although the operations of the method in the disclosure are described in a particular order in the drawings, it is not required or indicated that the operations must be executed according to the particular order, or the expected result can only be achieved by executing all described operations. Additionally or alternatively, some steps can be omitted, multiple steps can be merged into one for execution, and/or one step may be divided into several steps for execution.

It will be understood by those skilled in the art to which the embodiments of the disclosure pertain that the embodiments of the disclosure may be provided as a method, a system, or a computer program product. Therefore, the disclosure may use a form of hardware only embodiments, software only embodiments, or embodiments with a combination of software and hardware. In addition, the disclosure may use a form of a computer program product that is implemented on one or more computer-usable storage media (including but not limited to a magnetic disk memory, a CD-ROM, an optical memory, and the like) that includes computer-executed program code.

The disclosure is described with reference to the flowcharts and/or block diagrams of the method, the device (system), and the computer program product according to the embodiments of the disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

The computer program instructions may be loaded onto a computer or another programmable data processing device, so that a series of operations and steps are performed on the computer or other programmable device to produce computer-implemented processing. Therefore, the instructions executed on the computer or other programmable device provide steps for implementing a specific function in one or more processes in the flowcharts and/or in one or more blocks in the block diagrams.

**Claims**

1. An automatic lane-changing method for a vehicle, comprising:

   receiving (S501) a lane-changing request when the vehicle is in an automated driving state, the lane-changing request being provided with lane-changing direction information;
   predicting (S502), according to the lane-changing direction information, captured images in front of the vehicle and a current velocity of the vehicle, a motion state of the vehicle when arriving at a lane-changing destination;
   **characterized in that**
   planning (S504) a lane-changing path and a velocity for the vehicle at an i-th time, wherein i is an integer greater than or equal to 0, the lane-changing path and the velocity at the i-th time are planned and acquired by taking the motion state of the vehicle at the i-th time as an initial motion state and taking the predicted motion state as a target motion state;
   determining (S504) a steering angle of the vehicle at the i-th time according to a curvature of the lane-changing path at the i-th time, the velocity of the vehicle at the i-th time and a constructed model configured for determining the steering angle, comprising:

   substituting the curvature of the lane-changing path at the i-th time represented by U, and the velocity of the vehicle at the i-th time represented by v into the following formula:

   $$\delta_h = U \cdot (1 + K \cdot v^2) \cdot L \cdot i_s;$$

   where L represents a distance between a front axle and a rear axle of the vehicle, $i_s$ represents a steering ratio of the vehicle, and K represents a preset stability factor;
   and obtaining the steering angle at the i-th time represented by $\delta_h$;

   judging (S505) whether the steering angle of the vehicle at the i-th time falls in an effective steering angle range, wherein the effective steering angle range is determined based on the beginning and the destination of the lane-changing path; when it is judged not, returning to the step of planning (S504) a lane-changing path and a velocity for the vehicle at an i-th time; and when it is judged yes, determining (S506) the motion state of the vehicle at an (i+1)-th time, according to a vehicle motion model, the motion state of the vehicle at the i-th time, and the steering angle of the vehicle at the i-th time; and
   judging (S507) whether a difference between the target motion state and the motion state of the vehicle at the (i+1)-th time is larger than a preset error; when it is judged yes, updating (S508) i to i+1 and returning to the step of planning(S504) a lane-changing path and a velocity for the vehicle at an i-th time; and when it is judged not, driving (S509) the vehicle to change lanes according to the planned lane-changing path and velocity at any time.

2. The method as claimed in claim 1, wherein the step of predicting (S502), according to the lane-changing direction information, captured images in front of the vehicle and a current velocity of the vehicle, a motion state of the vehicle when arriving at a lane-changing destination comprises:

   determining (S201), according to the lane-changing direction information, a lane where the vehicle is located after changing lanes;
   extracting (S202), from each captured image in front of the vehicle, image information of a left lane line and a right lane line of the lane, and determining (S202), according to the extracted image information of the left lane line and the right lane line and relative driving position information set for the vehicle in the lane, a mathematical expression of a driving path, which is planned for the vehicle when being driven along the lane; and

inputting (S203) the current velocity of the vehicle into a pre-trained model configured for determining a lane-changing distance, and taking the output of the model as a distance required for the current lane-changing; and

determining (S204), according to the determined mathematical expression of the driving path and the distance required for the current lane-changing, the motion state of the vehicle when arriving at the lane-changing destination.

3. The method as claimed in claim 2, wherein the step of determining (S204), according to the extracted image information of the left lane line and the right lane line and relative driving position information set for the vehicle in the lane, a mathematical expression of a driving path, which is planned for the vehicle when being driven along the lane comprises:

determining, according to the extracted image information of each of the left and right lane lines, a mathematical expression of each of the left and right lane lines;

determining, according to the mathematical expressions of the left and right lane lines and the relative driving position information set for the vehicle in the lane, the mathematical expression of the driving path, which is planned for the vehicle when being driven along the lane.

4. The method as claimed in claim 3, wherein the motion state of the vehicle comprises coordinates of the vehicle and a heading angle of the vehicle, and the step of determining (S204), according to the determined mathematical expression of the driving path and the distance required for the current lane-changing, the motion state of the vehicle when arriving at the lane-changing destination comprises:

determining, according to the mathematical expression of the driving path and the distance required for the current lane-changing, coordinates of the lane-changing destination;

acquiring a first-order derivative function for the mathematical expression of the driving path, calculating a value of the first-order derivative function at the coordinates, and taking the value as the heading angle of the vehicle when arriving at the lane-changing destination.

5. The method as claimed in claim 4, further comprising:

acquiring a second-order derivative function for the mathematical expression of the driving path, calculating a value of the second-order derivative function at the coordinates, and taking the value as a target curvature of the last segment of the lane-changing path, which is planned for the vehicle; and

wherein the judging (S507) whether a difference between the target motion state and the motion state of the vehicle at the (i+1)-th time is larger than a preset error comprises:

acquiring a first difference between the motion state of the vehicle at the (i+1)-th time and the target motion state, acquiring a second difference between the curvature of the lane-changing path at the (i+1)-th time and the target curvature, and judging whether a summation of the first difference and the second difference is large than a preset value.

6. The method as claimed in claim 1, wherein the planning (S504) a lane-changing path and a velocity for the vehicle at an i-th time comprises:

planning the curvature of the lane-changing path at the i-th time by solving the following equation:

$$F(\overrightarrow{X_0}, U) - \overrightarrow{X_f} = 0;$$

where $\overrightarrow{X_0}$ represents the initial motion state, $\overrightarrow{X_f}$ represents the target motion state, and $\vec{X} = F(\overrightarrow{X_0}, U)$ is obtained by using a two degree-of-freedom vehicle model.

7. The method as claimed in claim 1, wherein the step of determining (S506) the motion state of the vehicle at an (i+1)-th time, according to a vehicle motion model, the motion state of the vehicle at the i-th time, and the steering angle of the vehicle at the i-th time comprises:

substituting the steering angle of the vehicle at the i-th time into the vehicle motion model;

taking an output of the vehicle motion model as an increment of the motion state of the vehicle; and
taking a summation of the motion state of the vehicle at the i-th time and the increment as the motion state of the vehicle at the (1+1)-th time.

8. An automatic lane-changing device for a vehicle, comprising:

a receiving module (701), configured to receive a lane-changing request when the vehicle is in an automated driving state, the lane-changing request being provided with lane-changing direction information;
a prediction module (702), configured to predict, according to the lane-changing direction information, captured images in front of the vehicle and a current velocity of the vehicle, a motion state of the vehicle when arriving at a lane-changing destination;
**characterized in that**
a planning module (703), configured to:

plan a lane-changing path and a velocity for the vehicle at an i-th time, wherein the lane-changing path and the velocity at the i-th time are planned and acquired by taking the motion state of the vehicle at the i-th time as an initial motion state and the predicted motion state is taken as a target motion state, and i is an integer greater than or equal to 0;
determine a steering angle of the vehicle at the i-th time according to a curvature of the lane-changing path at the i-th time, the velocity of the vehicle at the i-th time and a constructed model configured for determining the steering angle, wherein the planning module (703) is specifically configured to:

substitute the curvature of the lane-changing path at the i-th time represented by U, and the velocity of the vehicle at the i-th time represented by v into the following formula:

$$\delta_h = U \cdot (1 + K \cdot v^2) \cdot L \cdot i_s;$$

where L represents a distance between a front axle and a rear axle of the vehicle, $i_s$ represents a steering ratio of the vehicle, and K represents a preset stability factor; and
obtain the steering angle at the i-th time represented by $\delta_h$; and

judge whether the steering angle of the vehicle at the i-th time falls in an effective steering angle range, wherein the effective steering angle range is determined based on the beginning and the destination of the lane-changing path;
wherein the planning module (703) is further configured to return to the step of planning a lane-changing path and a velocity for the vehicle at an i-th time when it is judged not;
wherein the planning module (703) is further configured to determine the motion state of the vehicle at an (i+1)-th time, according to a vehicle motion model, the motion state of the vehicle at the i-th time, and the steering angle of the vehicle at the i-th time, when it is judged yes; and

a driving module (704), configured to judge whether a difference between the target motion state and the motion state of the vehicle at the (i+1)-th time is larger than a preset error; wherein the driving module (704) is further configured to update i to i+1 and return to the step of planning a lane-changing path and a velocity for the vehicle at an i-th time, when it is judged yes; wherein the driving module (704) is further configured to drive the vehicle to change lanes according to the planned lane-changing path and velocity at any time, when it is judged not.

9. The device as claimed in claim 8, wherein the prediction module (702) is specifically configured to:

determine, according to the lane-changing direction information, a lane where the vehicle is located after changing lanes;
extract, from each of the captured images in front of the vehicle, image information of a left lane line and a right lane line of the lane, and determine, according to the extracted image information of the left and right lane lines and relative driving position information set for the vehicle in the lane, a mathematical expression of a driving path, which is planned for the vehicle when being driven along the lane; and
input the current velocity of the vehicle into a pre-trained model configured for determining a lane-changing distance, and take the output of the model as a distance required for the current lane-changing; and
determine, according to the determined mathematical expression of the driving path and the distance required for the current lane-changing, the motion state of the vehicle when arriving at the lane-changing destination.

10. The device as claimed in claim 9, wherein the prediction module (702) is specifically configured to:

determine, according to the extracted image information of each of the left and right lane lines, a mathematical expression of each of the left and right lane lines;
determine, according to the mathematical expressions of the left and right lane lines, and the relative driving position information set for the vehicle in the lane, the mathematical expression of the driving path, which is planned for the vehicle when being driven along the lane.

11. The device as claimed in claim 10, wherein the motion state of the vehicle comprises coordinates of the vehicle and a heading angle of the vehicle, and the prediction module (702) is specifically configured to:

determine, according to the mathematical expression of the driving path and the distance required for the current lane-changing, coordinates of the lane-changing destination; and
acquire a first-order derivative function for the mathematical expression of the driving path, calculate a value of the first-order derivative function at the coordinates, and take the value as the heading angle of the vehicle when arriving at the lane-changing destination.

12. The device as claimed in claim 11,

wherein the prediction module (702) is further configured to acquire a second-order derivative function for the mathematical expression of the driving path, calculate a value of the second-order derivative function at the coordinates, and take the value as a target curvature of the last segment of the lane-changing path, which is planned for the vehicle; and
wherein the driving module (704) is further configured to determine a difference between the target curvature and the curvature of the lane-changing path at the i-th time is less than a preset value, when the difference between the motion state of the vehicle at the (i+1)-th time and the target motion state is judged less than the preset error.

13. The device as claimed in claim 10, a polynomial configured to fit the right lane line is $y_{left1} = a_{l10} + a_{l11} \cdot x + a_{l12} \cdot x^2 + a_{l13} \cdot x^3$, and a polynomial configured to fit the left lane line is $y_{left2} = a_{l20} + a_{l21} \cdot x + a_{l22} \cdot x^2 + a_{l23} \cdot x^3$, under a condition that the lane-changing direction information is changing lanes to the left;

wherein the prediction module (702) is specifically configured to:

determine values of $a_{l10}$, $a_{l11}$, $a_{l12}$ and $a_{l13}$, according to the image information of the right lane line; and
determine values of $a_{l20}$, $a_{l21}$, $a_{l22}$ and $a_{l23}$, according to the image information of the left lane line.

14. An electronic device, comprising: at least one processor (602) and a memory (603) communicatively connected with the at least one processor (602),
wherein the memory (603) stores instructions executable by the at least one processor (602), the instructions are configured to be executed by the at least one of the processors (602) to enable the at least one processor (603) to perform the method as claimed in any one of claims 1-7.

15. A computer readable storage medium, configured to store computer-executable instructions, wherein the computer-executable instructions are configured to perform the method as claimed in any one of claims 1-7.

**Patentansprüche**

1. Verfahren zum automatischen Spurwechseln für ein Fahrzeug, das Folgendes beinhaltet:

Empfangen (S501) einer Spurwechselanforderung, wenn sich das Fahrzeug in einem automatisierten Fahrzustand befindet, wobei die Spurwechselanforderung mit Spurwechselrichtungsinformationen versehen ist;
Vorhersagen (S502), gemäß den Spurwechselrichtungsinformationen, aufgenommenen Bildern vor dem Fahrzeug und einer aktuellen Geschwindigkeit des Fahrzeugs, eines Bewegungszustands des Fahrzeugs bei der Ankunft an einem Spurwechselziel;
**dadurch gekennzeichnet, dass**

Planen (S504) eines Spurwechselwegs und einer Geschwindigkeit für das Fahrzeug zu einem i-ten Zeitpunkt, wobei i eine ganze Zahl gleich oder größer 0 ist, wobei der Spurwechselweg und die Geschwindigkeit zum i-ten Zeitpunkt durch Nehmen des Bewegungszustands des Fahrzeugs zum i-ten Zeitpunkt als einen anfänglichen Bewegungszustand und Nehmen des vorhergesagten Bewegungszustands als einen Zielbewegungszustand geplant und erfasst werden;

Bestimmen (S504) eines Lenkwinkels des Fahrzeugs zum i-ten Zeitpunkt gemäß einer Krümmung des Spurwechselwegs zum i-ten Zeitpunkt, der Geschwindigkeit des Fahrzeugs zum i-ten Zeitpunkt und einem konstruierten Modell, das zum Bestimmen des Lenkwinkels konfiguriert ist, das Folgendes beinhaltet:

Einsetzen der Krümmung des Spurwechselwegs zum i-ten Zeitpunkt, dargestellt durch U, und der Geschwindigkeit des Fahrzeugs zum i-ten Zeitpunkt, dargestellt durch v, in die folgende Formel:

$$\delta_h = U \cdot (1 + K \cdot v^2) \cdot L \cdot i_s;$$

wobei L den Abstand zwischen einer Vorderachse und einer Hinterachse des Fahrzeugs darstellt, $i_s$ die Lenkübersetzung des Fahrzeugs darstellt und K einen voreingestellten Stabilitätsfaktor darstellt;
und Erhalten des Lenkwinkels zum i-ten Zeitpunkt, repräsentiert durch $\delta_h$;

Beurteilen (S505), ob der Lenkwinkel des Fahrzeugs zum i-ten Zeitpunkt in einen effektiven Lenkwinkelbereich fällt, wobei der effektive Lenkwinkelbereich auf der Basis des Beginns und des Ziels des Spurwechselwegs bestimmt wird; wenn dies als nein beurteilt wird, Zurückkehren zum Schritt des Planens (S504) eines Spurwechselwegs und einer Geschwindigkeit für das Fahrzeug zum i-ten Zeitpunkt; und wenn dies als ja beurteilt wird, Bestimmen (S506) des Bewegungszustands des Fahrzeugs zu einem (i+1)-ten Zeitpunkt gemäß einem Fahrzeugbewegungsmodell, dem Bewegungszustand des Fahrzeugs zum i-ten Zeitpunkt und dem Lenkwinkel des Fahrzeugs zum i-ten Zeitpunkt; und

Beurteilen (S507), ob eine Differenz zwischen dem Zielbewegungszustand und dem Bewegungszustand des Fahrzeugs zum (i+1)-ten Zeitpunkt größer als ein voreingestellter Fehler ist; wenn dies mit ja beurteilt wird, Aktualisieren (S508) von i auf i+1 und Zurückkehren zum Schritt des Planens (S504) eines Spurwechselwegs und einer Geschwindigkeit für das Fahrzeug zu einem i-ten Zeitpunkt; und wenn dies als nein beurteilt wird, Antreiben (S509) des Fahrzeugs zum Wechseln der Spur gemäß dem geplanten Spurwechselweg und der geplanten Geschwindigkeit zu einem beliebigen Zeitpunkt.

2. Verfahren nach Anspruch 1, wobei der Schritt des Vorhersagens (S502), gemäß den Spurwechselrichtungsinformationen, aufgenommenen Bildern vor dem Fahrzeug und einer aktuellen Geschwindigkeit des Fahrzeugs, eines Bewegungszustands des Fahrzeugs bei der Ankunft an einem Spurwechselziel Folgendes beinhaltet:

Bestimmen (S201), gemäß den Spurwechselrichtungsinformationen, einer Spur, auf der sich das Fahrzeug nach dem Spurwechsel befindet,
Extrahieren (S202), aus jedem aufgenommenen Bild vor dem Fahrzeug, von Bildinformationen einer linken Spurlinie und einer rechten Spurlinie der Spur, und Bestimmen (S202), gemäß den extrahierten Bildinformationen der linken Spurlinie und der rechten Spurlinie und den für das Fahrzeug in der Spur eingestellten relativen Fahrpositionsinformationen, eines mathematischen Ausdrucks eines Fahrwegs, der für das Fahrzeug geplant ist, wenn es entlang der Spur gefahren wird; und
Eingeben (S203) der aktuellen Geschwindigkeit des Fahrzeugs in ein vortrainiertes Modell, das zum Bestimmen einer Spurwechselentfernung konfiguriert ist, und Nehmen der Ausgabe des Modells als eine für den aktuellen Spurwechsel erforderliche Entfernung; und
Bestimmen (S204), gemäß dem bestimmten mathematischen Ausdruck des Fahrwegs und der für den aktuellen Spurwechsel erforderlichen Entfernung, des Bewegungszustands des Fahrzeugs bei der Ankunft an dem Spurwechselziel.

3. Verfahren nach Anspruch 2, wobei der Schritt des Bestimmens (S204), gemäß den extrahierten Bildinformationen der linken Spurlinie und der rechten Spurlinie und den für das Fahrzeug in der Spur eingestellten relativen Fahrpositionsinformationen, eines mathematischen Ausdrucks eines für das Fahrzeug geplanten Fahrwegs, wenn es entlang der Spur gefahren wird, Folgendes beinhaltet:
Bestimmen, gemäß den extrahierten Bildinformationen jeder der linken und rechten Spurlinien, eines mathematischen Ausdrucks jeder der linken und rechten Spurlinien;
Bestimmen, gemäß den mathematischen Ausdrücken der linken und rechten Spurlinien und den für das Fahrzeug in der Spur eingestellten relativen Fahrpositionsinformationen, des mathematischen Ausdrucks des Fahrwegs, der für das Fahrzeug geplant ist, wenn es entlang der Spur gefahren wird.

4. Verfahren nach Anspruch 3, wobei der Bewegungszustand des Fahrzeugs Koordinaten des Fahrzeugs und einen Kurswinkel des Fahrzeugs umfasst, und der Schritt des Bestimmens (S204), gemäß dem bestimmten mathematischen Ausdruck des Fahrwegs und der für den aktuellen Spurwechsel erforderlichen Entfernung, des Bewegungszustands des Fahrzeugs bei der Ankunft am Spurwechselziel Folgendes beinhaltet:

Bestimmen, gemäß dem mathematischen Ausdruck des Fahrwegs und der für den aktuellen Spurwechsel erforderlichen Entfernung, der Koordinaten des Spurwechselziels;
Erfassen einer Ableitungsfunktion erster Ordnung für den mathematischen Ausdruck des Fahrwegs, Berechnen eines Wertes der Ableitungsfunktion erster Ordnung an den Koordinaten und Nehmen des Wertes als den Kurswinkel des Fahrzeugs bei der Ankunft am Spurwechselziel.

5. Verfahren nach Anspruch 4, das ferner Folgendes beinhaltet:

Erfassen einer Ableitungsfunktion zweiter Ordnung für den mathematischen Ausdruck des Fahrwegs, Berechnen eines Werts der Ableitungsfunktion zweiter Ordnung an den Koordinaten und Nehmen des Werts als eine Zielkrümmung des letzten Segments des für das Fahrzeug geplanten Spurwechselwegs; und
wobei das Beurteilen (S507), ob eine Differenz zwischen dem Zielbewegungszustand und dem Bewegungszustand des Fahrzeugs zum (i+1)-ten Zeitpunkt größer als ein voreingestellter Fehler ist, Folgendes beinhaltet:
Erfassen einer ersten Differenz zwischen dem Bewegungszustand des Fahrzeugs zum (i+1)-ten Zeitpunkt und dem Zielbewegungszustand, Erfassen einer zweiten Differenz zwischen der Krümmung des Spurwechselwegs zum (i+1)-ten Zeitpunkt und der Zielkrümmung, und Beurteilen, ob eine Summe der ersten Differenz und der zweiten Differenz größer als ein voreingestellter Wert ist.

6. Verfahren nach Anspruch 1, wobei das Planen (S504) eines Spurwechselwegs und einer Geschwindigkeit für das Fahrzeug zu einem i-ten Zeitpunkt Folgendes beinhaltet:
Planen der Krümmung des Spurwechselwegs zum i-ten Zeitpunkt durch Lösen der folgenden Gleichung:

$$F(\overrightarrow{X_0}, U) - \overrightarrow{X_f} = 0;$$

wobei $\overrightarrow{X_0}$ den anfänglichen Bewegungszustand darstellt, $\overrightarrow{X_f}$ den Zielbewegungszustand darstellt und $\vec{X} = F(\overrightarrow{X_0}, U)$ durch Verwenden eines Fahrzeugmodells mit zwei Freiheitsgraden erhalten wird.

7. Verfahren nach Anspruch 1, wobei der Schritt des Bestimmens (S506) des Bewegungszustands des Fahrzeugs zu einem (i+1)-ten Zeitpunkt, gemäß einem Fahrzeugbewegungsmodell, dem Bewegungszustand des Fahrzeugs zum i-ten Zeitpunkt und dem Lenkwinkel des Fahrzeugs zum i-ten Zeitpunkt, Folgendes beinhaltet:

Einsetzen des Lenkwinkels des Fahrzeugs zum i-ten Zeitpunkt in das Fahrzeugbewegungsmodell,
Nehmen einer Ausgabe des Fahrzeugbewegungsmodells als Inkrement des Bewegungszustands des Fahrzeugs; und
Nehmen einer Summe des Bewegungszustands des Fahrzeugs zum i-ten Zeitpunkt und des Inkrements als den Bewegungszustand des Fahrzeugs zum i-ten Zeitpunkt.

8. Automatische Spurwechselvorrichtung für ein Fahrzeug, die Folgendes umfasst:

ein Empfangsmodul (701), das zum Empfangen einer Spurwechselanforderung konfiguriert ist, wenn sich das Fahrzeug in einem automatisierten Fahrzustand befindet, wobei die Spurwechselanforderung mit Spurwechselrichtungsinformationen versehen ist;
ein Vorhersagemodul (702), konfiguriert zum Vorhersagen, gemäß den Spurwechselrichtungsinformationen, aufgenommenen Bildern vor dem Fahrzeug und einer aktuellen Geschwindigkeit des Fahrzeugs, eines Bewegungszustands des Fahrzeugs bei der Ankunft an einem Spurwechselziel;
**dadurch gekennzeichnet, dass**
ein Planungsmodul (703), konfiguriert zum:

Planen eines Spurwechselwegs und einer Geschwindigkeit für das Fahrzeug zu einem i-ten Zeitpunkt, wobei der Spurwechselweg und die Geschwindigkeit zum i-ten Zeitpunkt durch Nehmen des Bewegungszustands des Fahrzeugs zum i-ten Zeitpunkt als anfänglichen Bewegungszustand und Nehmen des vorhergesagten Bewegungszustands als Zielbewegungszustand geplant und erfasst werden, wobei i eine ganze Zahl größer oder gleich 0 ist;

Bestimmen eines Lenkwinkels des Fahrzeugs zum i-ten Zeitpunkt gemäß einer Krümmung des Spurwechselwegs zum i-ten Zeitpunkt, der Geschwindigkeit des Fahrzeugs zum i-ten Zeitpunkt und einem zum Bestimmen des Lenkwinkels konfigurierten konstruierten Modell, wobei das Planungsmodul (703) speziell konfiguriert ist zum:

Einsetzen der Krümmung des Spurwechselwegs zum i-ten Zeitpunkt, dargestellt durch $U$, und der Geschwindigkeit des Fahrzeugs zum i-ten Zeitpunkt, dargestellt durch v, in die folgende Formel:

$$\delta_h = U \cdot (1 + K \cdot v^2) \cdot L \cdot i_s;$$

wobei L einen Abstand zwischen einer Vorderachse und einer Hinterachse des Fahrzeugs darstellt, $i_s$ eine Lenkübersetzung des Fahrzeugs darstellt, und K einen voreingestellten Stabilitätsfaktor darstellt; und Erhalten des Lenkwinkels zum i-ten Zeitpunkt, dargestellt durch $\delta_h$; und

Beurteilen, ob der Lenkwinkel des Fahrzeugs zum i-ten Zeitpunkt in einen effektiven Lenkwinkelbereich fällt, wobei der effektive Lenkwinkelbereich auf der Basis des Beginns und des Ziels des Spurwechselwegs bestimmt wird;

wobei das Planungsmodul (703) ferner zum Zurückkehren zum Schritt des Planens eines Spurwechselwegs und einer Geschwindigkeit für das Fahrzeug zu einem i-ten Zeitpunkt konfiguriert ist, wenn dies als nein beurteilt wird;

wobei das Planungsmodul (703) ferner zum Bestimmen des Bewegungszustands des Fahrzeugs zu einem (i+1)-ten Zeitpunkt, gemäß einem Fahrzeugbewegungsmodell, dem Bewegungszustand des Fahrzeugs zum i-ten Zeitpunkt und dem Lenkwinkel des Fahrzeugs zum i-ten Zeitpunkt konfiguriert ist, wenn dies als ja beurteilt wird; und

ein Fahrmodul (704), konfiguriert zum Beurteilen, ob eine Differenz zwischen dem Zielbewegungszustand und dem Bewegungszustand des Fahrzeugs zum (i+1)-ten Zeitpunkt größer als ein voreingestellter Fehler ist; wobei das Fahrmodul (704) ferner zum Aktualisieren von i auf i+1 und zum Zurückkehren zum Schritt des Planens eines Spurwechselwegs und einer Geschwindigkeit für das Fahrzeug zu einem i-ten Zeitpunkt konfiguriert ist, wenn dies als ja beurteilt wird; wobei das Fahrmodul (704) ferner zum Antreiben des Fahrzeugs zum Wechseln der Spur gemäß dem geplanten Spurwechselweg und der geplanten Geschwindigkeit zu einem beliebigen Zeitpunkt konfiguriert ist, wenn dies als nein beurteilt wird.

9. Vorrichtung nach Anspruch 8, wobei das Vorhersagemodul (702) speziell konfiguriert ist zum:

Bestimmen, gemäß den Spurwechselrichtungsinformationen, einer Spur, in der sich das Fahrzeug nach dem Spurwechsel befindet,

Extrahieren, aus jedem der aufgenommenen Bilder vor dem Fahrzeug, von Bildinformationen einer linken Spurlinie und einer rechten Spurlinie der Spur und Bestimmen, gemäß den extrahierten Bildinformationen der linken und rechten Spurlinien und für das Fahrzeug in der Spur eingestellten relativen Fahrpositionsinformationen, eines mathematischen Ausdrucks eines Fahrwegs, der für das Fahrzeug geplant ist, wenn es entlang der Spur gefahren wird; und

Eingeben der aktuellen Geschwindigkeit des Fahrzeugs in ein vortrainiertes Modell, das zum Bestimmen einer Spurwechselentfernung konfiguriert ist, und Nehmen der Ausgabe des Modells als eine für den aktuellen Spurwechsel erforderliche Entfernung; und

Bestimmen, gemäß dem bestimmten mathematischen Ausdruck des Fahrwegs und der für den aktuellen Spurwechsel erforderlichen Entfernung, des Bewegungszustands des Fahrzeugs bei der Ankunft am Spurwechselziel.

10. Vorrichtung nach Anspruch 9, wobei das Vorhersagemodul (702) speziell konfiguriert ist zum:

Bestimmen, gemäß den extrahierten Bildinformationen jeder der linken und rechten Spurlinien, eines mathematischen Ausdrucks jeder der linken und rechten Spurlinien;

Bestimmen, gemäß den mathematischen Ausdrücken der linken und rechten Spurlinien und den für das Fahrzeug in der Spur eingestellten relativen Fahrpositionsinformationen, des mathematischen Ausdrucks des Fahrwegs, der für das Fahrzeug geplant ist, wenn es entlang der Spur gefahren wird.

11. Vorrichtung nach Anspruch 10, wobei der Bewegungszustand des Fahrzeugs Koordinaten des Fahrzeugs und einen Kurswinkel des Fahrzeugs umfasst, und das Vorhersagemodul (702) speziell konfiguriert ist zum:

Bestimmen, gemäß dem mathematischen Ausdruck des Fahrwegs und der für den aktuellen Spurwechsel erforderlichen Entfernung, von Koordinaten des Spurwechselziels; und

Erfassen einer Ableitungsfunktion erster Ordnung für den mathematischen Ausdruck des Fahrwegs, Berechnen eines Wertes der Ableitungsfunktion erster Ordnung an den Koordinaten und Nehmen des Wertes als den Kurswinkel des Fahrzeugs bei der Ankunft am Spurwechselziel.

12. Vorrichtung nach Anspruch 11,

wobei das Vorhersagemodul (702) ferner konfiguriert ist zum Erfassen einer Ableitungsfunktion zweiter Ordnung für den mathematischen Ausdruck des Fahrwegs, Berechnen eines Wertes der Ableitungsfunktion zweiter Ordnung an den Koordinaten und Nehmen des Wertes als eine Zielkrümmung des letzten Segments des für das Fahrzeug geplanten Spurwechselwegs; und

wobei das Fahrmodul (704) ferner konfiguriert ist zum Bestimmen, dass eine Differenz zwischen der Zielkrümmung und der Krümmung des Spurwechselwegs zum i-ten Zeitpunkt kleiner als ein voreingestellter Wert ist, wenn die Differenz zwischen dem Bewegungszustand des Fahrzeugs zum (i+1)-ten Zeitpunkt und dem Zielbewegungszustand als kleiner als der voreingestellte Fehler beurteilt wird.

13. Vorrichtung nach Anspruch 10, wobei ein Polynom, das so konfiguriert ist, dass es zur rechten Spurlinie passt, $y_{left1}$ = $a_{l10}$ + $a_{l11}$ · $x$ + $a_{l12}$ · $x^2$ + $a_{l13}$ · $x^3$ ist, und ein Polynom, das so konfiguriert ist, dass es zur linken Spurlinie passt, $y_{left2}$ = $a_{l20}$ + $a_{l21}$ · $x$ + $a_{l22}$ · $x^2$ + $a_{l23}$ · $x^3$ ist, unter einer Bedingung, dass die Spurwechselrichtungsinformationen einen Spurwechsel nach links angeben;

wobei das Vorhersagemodul (702) speziell konfiguriert ist zum:

Bestimmen von Werten von $a_{l10}$, $a_{l11}$, $a_{l12}$ und $a_{l13}$, gemäß den Bildinformationen der rechten Spurlinie; und

Bestimmen von Werten von $a_{l20}$, $a_{l21}$, $a_{l22}$ und $a_{l23}$, gemäß den Bildinformationen der linken Spurlinie.

14. Elektronische Vorrichtung, die Folgendes umfasst: mindestens einen Prozessor (602) und einen Speicher (603), der kommunikativ mit dem mindestens einen Prozessor (602) verbunden ist,

wobei der Speicher (603) Befehle speichert, die von dem mindestens einen Prozessor (602) ausgeführt werden können, wobei die Befehle zur Ausführung durch den mindestens einen der Prozessoren (602) konfiguriert sind, so dass der mindestens eine Prozessor (603) das Verfahren nach einem der Ansprüche 1-7 durchführen kann.

15. Computerlesbares Speichermedium, das zum Speichern von computerausführbaren Befehlen konfiguriert ist, wobei die computerausführbaren Befehle zum Durchführen des Verfahrens nach einem der Ansprüche 1-7 konfiguriert sind.

**Revendications**

1. Procédé de changement automatique de voie pour un véhicule, comprenant :

une réception (S501) d'une demande de changement de voie lorsque le véhicule est dans un état de conduite automatisée, la demande de changement de voie étant fournie d'informations de direction de changement de voie ;

une prédiction (S502), selon les informations de direction de changement de voie, des images capturées devant le véhicule et une vitesse actuelle du véhicule, d'un état de mouvement du véhicule lors de son arrivée au niveau d'une destination de changement de voie ;

**caractérisé en ce**

**qu'**une planification (S504) d'une trajectoire de changement de voie et d'une vitesse pour le véhicule à un instant i, dans lequel i est un entier supérieur ou égal à 0, la trajectoire de changement de voie et la vitesse à l'instant i sont planifiées et acquises en considérant l'état de mouvement du véhicule à l'instant i à titre d'état de mouvement initial et en considérant l'état de mouvement prédit à titre d'état de mouvement cible ;

**qu'**une détermination (S504) d'un angle de braquage du véhicule à l'instant i selon une courbure de la trajectoire de changement de voie à l'instant i, la vitesse du véhicule à l'instant i et un modèle construit configuré pour déterminer l'angle de braquage, comprenant :

une substitution de la courbure de la trajectoire de changement de voie à l'instant i représentée par U, et de la vitesse du véhicule à l'instant i représentée par v dans la formule suivante :

$$\delta_h = U \cdot (1 + K \cdot v^2) \cdot L \cdot i_s;$$

où L représente une distance entre un essieu avant et un essieu arrière du véhicule, $i_s$ représente un rapport de réduction de la direction du véhicule, et K représente un facteur de stabilité prédéfini ;
et une obtention de l'angle de braquage à l'instant i représenté par $\delta_h$ ;

un jugement (S505) de si l'angle de braquage du véhicule à l'instant i se trouve dans une plage d'angle de braquage efficace ou non, dans lequel la plage d'angle de braquage efficace est déterminée sur la base du début et de la destination de la trajectoire de changement de voie ; lorsqu'il est jugé que non, un retour à l'étape de planification (S504) d'une trajectoire de changement de voie et d'une vitesse pour le véhicule à un instant i ; et lorsqu'il est jugé que oui, une détermination (S506) de l'état de mouvement du véhicule à un instant (i + 1), selon un modèle de mouvement de véhicule, l'état de mouvement du véhicule à l'instant i, et l'angle de braquage du véhicule à l'instant i ; et

un jugement (S507) de si une différence entre l'état de mouvement cible et l'état de mouvement du véhicule à l'instant (i + 1) est supérieure à une erreur prédéfinie ou non ; lorsqu'il est jugé que oui, une mise à jour (S508) de i en i + 1 et un retour à l'étape de planification (S504) d'une trajectoire de changement de voie et d'une vitesse pour le véhicule à un instant i ; et lorsqu'il est jugé que non, une conduite (S509) du véhicule pour changer de voie selon la trajectoire de changement de voie et la vitesse planifiées à tout moment.

2. Procédé selon la revendication 1, dans lequel l'étape de prédiction (S502), selon les informations de direction de changement de voie, des images capturées devant le véhicule et une vitesse actuelle du véhicule, d'un état de mouvement du véhicule lors de son arrivée au niveau d'une destination de changement de voie comprend :

une détermination (S201), selon les informations de direction de changement de voie, d'une voie où le véhicule est localisé après le changement de voie ;
une extraction (S202), à partir de chaque image capturée devant le véhicule, d'informations d'image d'une ligne gauche de voie et d'une ligne droite de voie de la voie, et une détermination (S202), selon les informations d'image extraites de la ligne gauche de voie et de la ligne droite de voie et des informations de position de conduite relative définies pour le véhicule dans la voie, d'une expression mathématique d'une trajectoire de conduite, qui est planifiée pour le véhicule lorsqu'il est conduit le long de la voie ; et
une entrée (S203) de la vitesse actuelle du véhicule dans un modèle pré-formé configuré pour déterminer une distance de changement de voie, et une considération de la sortie du modèle à titre de distance requise pour le changement de voie actuel ; et
une détermination (S204), selon l'expression mathématique déterminée de la trajectoire de conduite et la distance requise pour le changement de voie actuel, de l'état de mouvement du véhicule lors de son arrivée au niveau de la destination de changement de voie.

3. Procédé selon la revendication 2, dans lequel l'étape de détermination (S204), selon les informations d'image extraites de la ligne gauche de voie et de la ligne droite de voie et des informations de position de conduite relative définies pour le véhicule dans la voie, d'une expression mathématique d'une trajectoire de conduite, qui est planifiée pour le véhicule lorsqu'il est conduit le long de la voie comprend :

une détermination, selon les informations d'image extraites de chacune des lignes gauche et droite de voie, d'une expression mathématique de chacune des lignes gauche et droite de voie ;
une détermination, selon les expressions mathématiques des lignes gauche et droite de voie et les informations de position de conduite relative définies pour le véhicule dans la voie, de l'expression mathématique de la trajectoire de conduite, qui est planifiée pour le véhicule lorsqu'il est conduit le long de la voie.

4. Procédé selon la revendication 3, dans lequel l'état de mouvement du véhicule comprend des coordonnées du véhicule et un angle de lacet du véhicule, et l'étape de détermination (S204), selon l'expression mathématique déterminée de la trajectoire de conduite et la distance requise pour le changement de voie actuel, de l'état de mouvement du véhicule lors de son arrivée au niveau de la destination de changement de voie comprend :

une détermination, selon l'expression mathématique de la trajectoire de conduite et la distance requise pour le changement de voie actuel, de coordonnées de la destination de changement de voie ;

une acquisition d'une fonction dérivée de premier ordre pour l'expression mathématique de la trajectoire de conduite, un calcul d'une valeur de la fonction dérivée de premier ordre au niveau des coordonnées, et une considération de la valeur à titre d'angle de lacet du véhicule lors de son arrivée à la destination de changement de voie ;

**5.** Procédé selon la revendication 4, comprenant en outre :

une acquisition d'une fonction dérivée de second ordre pour l'expression mathématique de la trajectoire de conduite, un calcul d'une valeur de la fonction dérivée de second ordre au niveau des coordonnées, et une considération de la valeur à titre de courbure cible du dernier segment de la trajectoire de changement de voie, qui est planifiée pour le véhicule ; et

dans lequel le jugement (S507) de si une différence entre l'état de mouvement cible et l'état de mouvement du véhicule à l'instant (i + 1) est supérieure à une erreur prédéfinie ou non comprend :

une acquisition d'une première différence entre l'état de mouvement du véhicule à l'instant (i + 1) et l'état de mouvement cible, une acquisition d'une seconde différence entre la courbure de la trajectoire de changement de voie à l'instant (i + 1) et la courbure cible, et un jugement de si une somme de la première différence et de la seconde différence est supérieure à une valeur prédéfinie ou non.

**6.** Procédé selon la revendication 1, dans lequel la planification (S504) d'une trajectoire de changement de voie et d'une vitesse pour le véhicule à un instant i comprend :

une planification de la courbure de la trajectoire de changement de voie à l'instant i en résolvant l'équation suivante :

$$F(\vec{X_0}, U) - \vec{X_f} = 0;$$

où $\vec{X_0}$ représente l'état de mouvement initial, $\vec{X_f}$ représente l'état de mouvement cible, et $\vec{X} = F(\vec{X_0}, U)$ est obtenu en utilisant un modèle de véhicule à deux degrés de liberté.

**7.** Procédé selon la revendication 1, dans lequel l'étape de détermination (S506) de l'état de mouvement du véhicule à un instant (i + 1), selon un modèle de mouvement de véhicule, l'état de mouvement du véhicule à l'instant i, et l'angle de braquage du véhicule à l'instant i comprend :

une substitution de l'angle de braquage du véhicule à l'instant i dans le modèle de mouvement de véhicule ;

une considération d'une sortie du modèle de mouvement de véhicule à titre d'incrément de l'état de mouvement du véhicule ; et

une considération d'une somme de l'état de mouvement du véhicule à l'instant i et de l'incrément à titre d'état de mouvement du véhicule à l'instant (i + 1).

**8.** Dispositif de changement automatique de voie pour un véhicule, comprenant :

un module de réception (701) configuré pour recevoir une demande de changement de voie lorsque le véhicule est dans un état de conduite automatisée, la demande de changement de voie étant fournie d'informations de direction de changement de voie ;

un module de prédiction (702), configuré pour prédire, selon les informations de direction de changement de voie, des images capturées devant le véhicule et une vitesse actuelle du véhicule, un état de mouvement du véhicule lors de son arrivée au niveau d'une destination de changement de voie ;

**caractérisé en ce**

**qu'**un module de planification (703), configuré pour :

planifier une trajectoire de changement de voie et une vitesse pour le véhicule à un instant i, dans lequel la trajectoire de changement de voie et la vitesse à l'instant i sont planifiées et acquises en considérant l'état de mouvement du véhicule à l'instant i à titre d'état de mouvement initial et l'état de mouvement prédit est considéré à titre d'état de mouvement cible, et i est un entier supérieur ou égal à 0 ;

déterminer un angle de braquage du véhicule à l'instant i selon une courbure de la trajectoire de changement de voie à l'instant i, la vitesse du véhicule à l'instant i et un modèle construit configuré pour déterminer l'angle de braquage, dans lequel le module de planification (703) est spécifiquement configuré pour :

substituer la courbure de la trajectoire de changement de voie à l'instant i représentée par *U*, et la vitesse du véhicule à l'instant i représentée par v dans la formule suivante :

$$\delta_h = U \cdot (1 + K \cdot v^2) \cdot L \cdot i_s;$$

où *L* représente une distance entre un essieu avant et un essieu arrière du véhicule, $i_s$ représente un rapport de réduction de la direction du véhicule, et *K* représente un facteur de stabilité prédéfini ; et obtenir l'angle de braquage à l'instant i représenté par $\delta_h$ ; et

juger si l'angle de braquage du véhicule à l'instant i se trouve dans une plage d'angle de braquage efficace ou non, dans lequel la plage d'angle de braquage efficace est déterminée sur la base du début et de la destination de la trajectoire de changement de voie ;
dans lequel le module de planification (703) est en outre configuré pour retourner à l'étape de planification d'une trajectoire de changement de voie et d'une vitesse pour le véhicule à un instant i lorsqu'il est jugé que non ;
dans lequel le module de planification (703) est en outre configuré pour déterminer l'état de mouvement du véhicule à un instant (i + 1), selon un modèle de mouvement de véhicule, l'état de mouvement du véhicule à l'instant i, et l'angle de braquage du véhicule à l'instant i lorsqu'il est jugé que oui ; et

un module de conduite (704), configuré pour juger si une différence entre l'état de mouvement cible et l'état de mouvement du véhicule à l'instant (i + 1) est supérieure à une erreur prédéfinie ou non ; dans lequel le module de conduite (704) est en outre configuré pour mettre à jour i en i + 1 et retourner à l'étape de planification d'une trajectoire de changement de voie et d'une vitesse pour le véhicule à un instant i, lorsqu'il est jugé que oui ;
dans lequel le module de conduite (704) est en outre configuré pour conduire le véhicule pour changer de voie selon la trajectoire de changement de voie et la vitesse planifiées à tout moment, lorsqu'il est jugé que non.

9. Dispositif selon la revendication 8, dans lequel le module de prédiction (702) est spécifiquement configuré pour :

déterminer, selon les informations de direction de changement de voie, une voie où le véhicule est localisé après le changement de voie ;
extraire, à partir de chacune des images capturées devant le véhicule, des informations d'image d'une ligne gauche de voie et d'une ligne droite de voie de la voie, et déterminer, selon les informations d'image extraites des lignes gauche et droite de voie et des informations de position de conduite relative définies pour le véhicule dans la voie, une expression mathématique d'une trajectoire de conduite, qui est planifiée pour le véhicule lorsqu'il est conduit le long de la voie ; et
entrer la vitesse actuelle du véhicule dans un modèle pré-formé configuré pour déterminer une distance de changement de voie, et considérer la sortie du modèle à titre de distance requise pour le changement de voie actuel ; et
déterminer, selon l'expression mathématique déterminée de la trajectoire de conduite et la distance requise pour le changement de voie actuel, l'état de mouvement du véhicule lors de son arrivée au niveau de la destination de changement de voie.

10. Dispositif selon la revendication 9, dans lequel le module de prédiction (702) est spécifiquement configuré pour :

déterminer, selon les informations d'image extraites de chacune des lignes gauche et droite de voie, une expression mathématique de chacune des lignes gauche et droite de voie ;
déterminer, selon les expressions mathématiques des lignes gauche et droite de voie et les informations de position de conduite relative définies pour le véhicule dans la voie, l'expression mathématique de la trajectoire de conduite, qui est planifiée pour le véhicule lorsqu'il est conduit le long de la voie.

11. Dispositif selon la revendication 10, dans lequel l'état de mouvement du véhicule comprend des coordonnées du véhicule et un angle de lacet du véhicule, et le module de prédiction (702) est spécifiquement configuré pour :

déterminer, selon l'expression mathématique de la trajectoire de conduite et la distance requise pour le changement de voie actuel, des coordonnées de la destination de changement de voie ; et

acquérir une fonction dérivée de premier ordre pour l'expression mathématique de la trajectoire de conduite, calculer une valeur de la fonction dérivée de premier ordre au niveau des coordonnées, et considérer la valeur à titre d'angle de lacet du véhicule lors de son arrivée au niveau de la destination de changement de voie.

12. Dispositif selon la revendication 11,

dans lequel le module de prédiction (702) est en outre configuré pour acquérir une fonction dérivée de second ordre pour l'expression mathématique de la trajectoire de conduite, calculer une valeur de la fonction dérivée de second ordre au niveau des coordonnées, et considérer la valeur à titre de courbure cible du dernier segment de la trajectoire de changement de voie, qui est planifiée pour le véhicule ; et
dans lequel le module de conduite (704) est en outre configuré pour déterminer qu'une différence entre la courbure cible et la courbure de la trajectoire de changement de voie à l'instant i est inférieure à une valeur prédéfinie, lorsque la différence entre l'état de mouvement du véhicule à l'instant (i + 1) et l'état de mouvement cible est jugée inférieure à l'erreur prédéfinie.

13. Dispositif selon la revendication 10, un polynôme configuré pour représenter la ligne droite de voie est $y_{left1} = a_{l10} + a_{l11} \cdot x + a_{l12} \cdot x^2 + a_{l13} \cdot x^3$, et un polynôme configuré pour représenter la ligne gauche de voie est $y_{\text{left2}} = a_{l20} + a_{l21} \cdot x + a_{l22} \cdot x^2 + a_{l23} \cdot x^3$,

à condition que les informations de direction de changement de voie concernent un changement de voie vers la gauche ;
dans lequel le module de prédiction (702) est spécifiquement configuré pour :

déterminer des valeurs de $\alpha_{l10}$, $\alpha_{l11}$, $\alpha_{l12}$ and $\alpha_{l13}$, selon les informations d'image de la ligne droite de voie ; et
déterminer des valeurs de $a_{l20}$, $\alpha_{l21}$, $\alpha_{l22}$, and $\alpha_{l23}$, selon les informations d'image de la ligne gauche de voie.

14. Dispositif électronique, comprenant : au moins un processeur (602) et une mémoire (603)
en connexion de communication avec l'au moins un processeur (602)
dans lequel la mémoire (603) stocke des instructions exécutables par l'au moins un processeur (602), les instructions sont configurées pour être exécutées par l'au moins un des processeurs (602) pour permettre à l'au moins un processeur (603) de réaliser le procédé selon l'une quelconque des revendications 1 à 7.

15. Support de stockage lisible par ordinateur, configuré pour stocker des instructions exécutables par ordinateur, dans lequel les instructions exécutables par ordinateur sont configurées pour réaliser le procédé selon l'une quelconque des revendications 1 à 7.

FIG. 1

determining, according to the lane-changing direction information, a lane where the vehicle is located after changing lanes ⌐S201

extracting, from each captured image in front of the vehicle, image information of a left lane line and a right lane line of the lane, and determining, according to the extracted image information of the left lane line and the right lane line and relative driving position information set for the vehicle in the lane, a mathematical expression of a driving path, which is planned for the vehicle when being driven along the lane ⌐S202

inputting the current velocity of the vehicle into a pre-trained model configured for determining a lane-changing distance, and taking the output of the model as a distance required for the current lane-changing ⌐S203

determining, according to the determined mathematical expression of the driving path and the distance required for the current lane-changing, the motion state of the vehicle when arriving at the lane-changing destination ⌐S204

FIG. 2

FIG. 3

FIG. 4

receiving a lane-changing request when the vehicle is in an automated driving state, the lane-changing request being provided with lane-changing direction information — S501

predicting, according to the lane-changing direction information, captured images in front of the vehicle and a current velocity of the vehicle, a motion state of the vehicle when arriving at a lane-changing destination — S502

assigning the value of i, which represents a time of planning, to 0 — S503

planning a lane-changing path and a velocity for the vehicle at an i-th time, and determining a steering angle of the vehicle at the i-th time according to a curvature of the lane-changing path, the velocity of the vehicle and a constructed model configured for determining the steering angle at the i-th time, wherein i is an integer greater than or equal to 0, the lane-changing path and the velocity at the i-th time are planned and acquired by taking the motion state of the vehicle at the i-th time as an initial motion state and taking the predicted motion state as a target motion state — S504

judging whether the steering angle of the vehicle at the i-th time falls in an effective steering angle range — S505
NO

Yes

determining the motion state of the vehicle at an (i+1)-th time, according to a vehicle motion model, the motion state of the vehicle at the i-th time, and the steering angle of the vehicle at the i-th time — S506

i=i+1 — S508

judging whether a difference between the target motion state and the motion state of the vehicle at the (i+1)-th time is less than a preset error — S507
NO

Yes

driving the vehicle to change lanes according to the planned lane-changing path and velocity at any time — S509

FIG. 5

601

Transceiver

602

Processor

604

603

Memory

FIG. 6

701

Receiving module

702

Prediction module

Planning module

Driving module

703

704

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2009319113 A1